# EUROPEAN PATENT APPLICATION

(11) **EP 1 962 465 A1**
(43) Date of publication of application: **27.08.2008**
(21) Application number: 07003736.1
(22) Date of filing: 23.02.2007
(51) Int. Cl.: H04L 29/06

(54) **Mood exchange via media gateway**

(71) Applicant: Nokia Siemens Networks GmbH & Co. KG, 81541 München (DE)
(72) Inventor: Dimitriadis, Argyrios, 10455 Athens (GR)

(57) **Abstract**

Method for transmitting a user related information from a first telecommunication network (110) to a second telecommunication network (120), whereas the first telecommunication network (110) and the second telecommunication network (120) are interconnected by means of a media gateway (130) and the media gateway (130) is controlled by means of a media gateway controller (140) complying with the MEGACO Protocol whereas a telecommunication connection between the first telecommunication network (110) and the second telecommunication network (120) is established via the media gateway (130) or via the media gateway controller (140), characterized in that

the media gateway controller (140) and the media gateway (130) have implemented a package (142) which enables the method steps of
a) an extraction of the user related information from data which is transmitted over the telecommunication connection, and
b) the encoding of the extracted user related information in a format (124) which complies with the second telecommunication network (120).

## Description

The invention relates to a method for transmitting a user related information from a first telecommunication network to a second telecommunication network. The invention also relates to a telecommunication system which is adapted for performing the method.

Some instant messengers provide a possibility to convey the mood from one party to another. Technically, the mood is transmitted as a coded parameter or a set of coded parameters over the internet. However, according to the state of the art there is no possibility for end users who are involved in a telecommunication session to transmit their parameterized current moods in real time if they are located in two different telecommunication networks which are connected by means of a media gateway. For example, for two participants in a telephone conversation, it is not possible to exchange a parameter for the mood or some other user related information via an Integrated Services Digital Network (ISDN) or a Public switched telephone network (PSTN). It is the objective of the present invention to solve this problem.

The problem is solved according to the invention by the characteristics of the independent claims. Further embodiments of the invention are disclosed in the dependent claims.

According to the invention a first telecommunication network and a second telecommunication network are interconnected by means of a media gateway. The media gateway is controlled by means of a media gateway controller which complies with the MEGACO Protocol (ITU-T, H.248.1). A telecommunication connection between the first telecommunication network and the second telecommunication network is established via the media gateway or via the media gateway controller. The media gateway controller and the media gateway have implemented a package which enables the method steps of:
a) an extraction of the user related information from data transmitted over the telecommunication connection, and
b) the encoding of the extracted user related information in a format which complies with the second telecommunication network.

The package preferably complies with the mandatory recommendations of chapter 12.1 of the MEGACO Protocol, in order to achieve a high degree of compatibility with network equipment.

The user related information preferably comprises non-technical information about one of the users, such as for example the mood of one of the users.

In a preferred embodiment, the extraction of the user related information comprises the analysis of a voice stream which flows from a first user device which is connected to the first telecommunication network to a second user device which is connected to the second telecommunication network. The encoding in the format which complies with the second telecommunication network comprises the allocation of a value to at least one parameter which represents at least a part of the user related information. As an example, this way it is possible to detect the mood of a user who is involved in a telephone conversation. The extraction of the mood out of the voice stream can for example be done by means of voice pattern analyses. As an example, the pitch of voice and the speed of speaking which in many cases comprise considerable information about the mood of the speaker, can be detected automatically.

In another preferred embodiment, the user related information is not detected automatically by analyzing a voice stream, but before the extraction of the user related information, the user related information is encoded in parameterized form and encapsulated within a first data structure which complies with the first telecommunication network. The encapsulation and/or the encoding are performed by a first user device which is connected to the first telecommunication network. The extraction of the user related information is performed by at least partially decapsulating the user related information from the first data structure, which results in an intermediate data structure. The encoding of the extracted user related information in the format which complies with the second telecommunication network comprises a further encapsulation of the intermediate structure, which results in a second data structure which complies with the second telecommunication network. After that the second data structure is forwarded to a second user device which is located in the second telecommunication network. The second user device is able to decapsulate and to decode the second data structure.

In another preferred embodiment, the method steps a) and b) are performed after predetermined time intervals. Before the first performing of the method steps a) and b), the user related information is initially set to a default value which is afterwards repeatedly adapted according to the time intervals. This way, the user related information can be transmitted more quickly to a user device within the second telecommunication network. Although the user related information is not necessarily correct within the time interval from the initiation of a telecommunication connection to the first adapting, a good choice of the default value can result in an increased probability of a correct user related information.

Further aspects, advantages and details of the invention will be described by referring to the attached drawings which disclose preferred embodiments of the invention.

Figure 1 shows a telecommunication system according to a preferred embodiment of the invention.

Figure 2 shows a call flow according to a preferred embodiment of the invention.

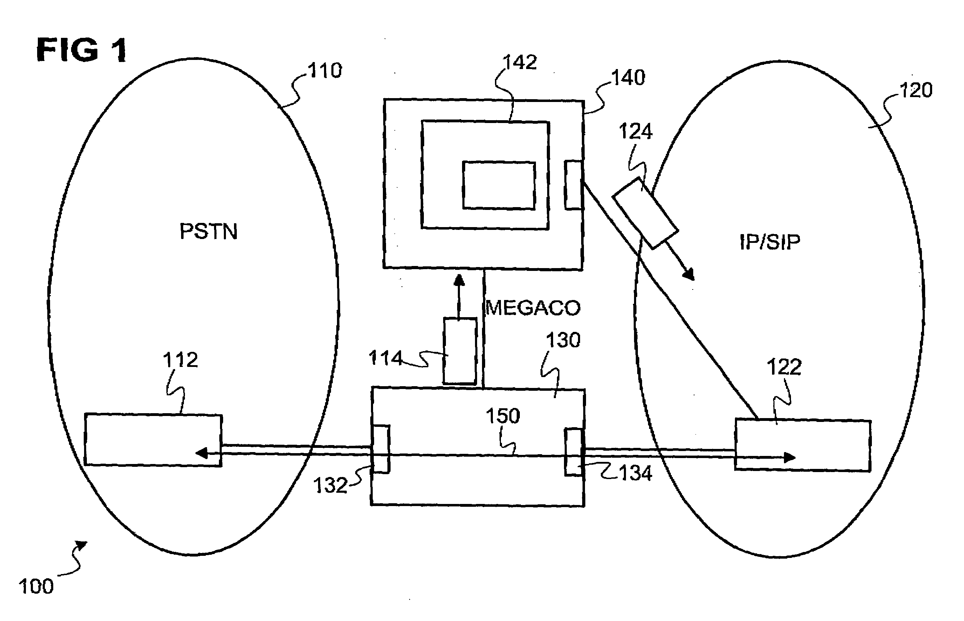

Figure 1 shows a telecommunication system 100 which comprises a first telecommunication network 110, a second telecommunication network 120, a media gateway 130 and a media gateway controller 140. The first telecommunication network 110 is a public switched telephone network PSTN and comprises a first user device 112, for example a telephone. The second telecommunication network 120 is based on the internet protocol IP and on the session initiation protocol SIP and comprises a second user device 122, for example an IP-telephone. The media gateway 130 comprises a first interface 132 which is connected to the first telecommunication network 110 and a second interface 134 which is connected to the second telecommunication network 120. The media gateway controller 140 complies with the mandatory recommendations of the MEGACO Protocol as specified in ITU-T, H.248.1. In addition, the media gateway controller 140 has implemented a package 142 which complies with the recommendations of chapter 12.1 of the MEGACO Protocol. The media gateway 130 is adapted to be compatible with the media gateway controller 140 and with the package 142.

A telephone connection 150 between the first user device 112 and the second user device 122 is established via the media gateway 130, preferably via the first interface 132 and the second interface 134. The package 142 instructs the media gateway 130 to extract the mood of a user who operates the user device 112. The extraction is done based on voice pattern analysis of the voice stream that flows from the first user device 112 to the second user device 122. A value for the mood is assigned to a parameter representing the mood of the user of the first user device 112. The parameter is then encoded in a data structure 114 which complies with the MEGACO-protocol and handed over to the media gateway controller 140. The media gateway controller decodes the format 114 and encodes the parameter in a data structure 124 which complies with the second telecommunication network 120. The data structure 124 is then forwarded to the second user device 122, where the mood is decoded. The forwarding of the data structure 124 can be done via a direct connection from the media gateway controller 140 to the second user device 122, or via the media gateway 130. In the example of Figure 1, the forwarding is done directly.

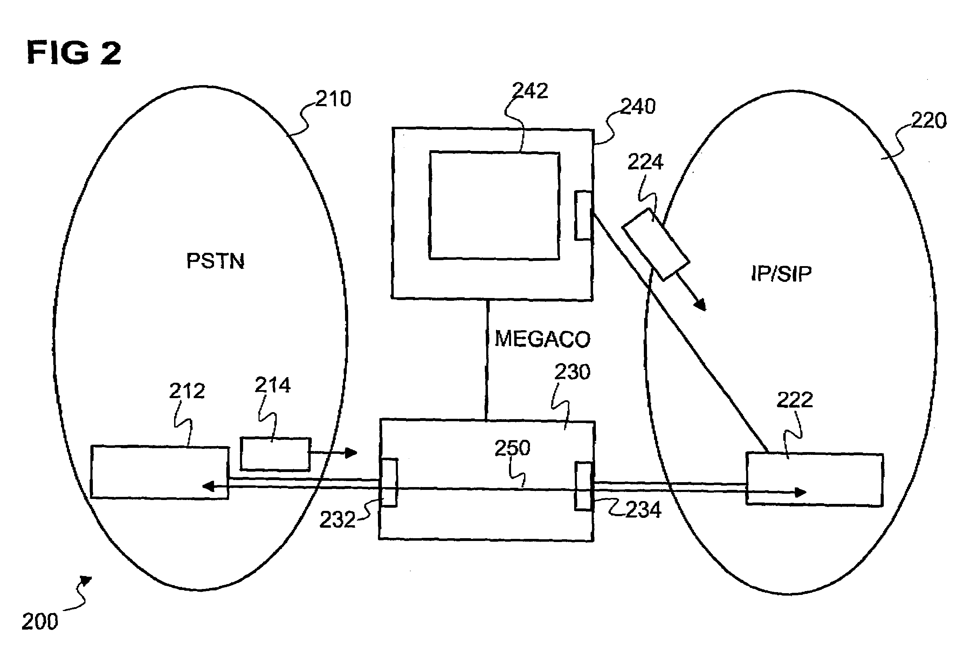

Figure 2 shows a further preferred embodiment, which is similar to the embodiment of figure 1. However, in figure 2, the mood is not extracted by means of voice pattern analysis, but the mood is typed in by the user of the first user device 212 by means of DTMF tones. Based on the user input, the mood is encoded in parameterized form within a data structure 214 which complies with the first telecommunication network 210. The data structure 214 is then forwarded to the media gateway 230 and to the media gateway controller 240 , where it is encoded in a data structure 224 which complies with the second telecommunication network 120. After that the data structure 224 is forwarded to the second user device 222, where the mood of the user of the first user device is decoded.

In another preferred embodiment, the package 142, 242 controls the sampling period, which is defined as the minimum elapsed time of voice packet accumulation, before the mood extraction process is applied. Memory within the media gateway controller 140, 240 is reserved in order to store the parameters for the mood and/or other user related information. Preferably for each user device 112, 122, 212, 222 which is involved in a telecommunication connection, sufficient memory for storing and transforming the mood and/or other user related information is reserved. The user related information is preferably stored longer than the telecommunication connection 150, 250 lasts.

According to a preferred embodiment, parameters representing the user related information are stored for a longer time duration than the telecommunication session, such that in a following session they do not need to be acquired again. Preferably, the user related information of a user is stored within the media gateway 130, 230 and/or within the media gateway controller 140, 240 until a change in the value of the user related information is detected. This way, the user related information is at disposition for all users who are connected to the media gateway 130, 230.

In another preferred embodiment the user related information of involved users are deleted after the telecommunication session, such that memory can be allocated for further telecommunication sessions of other users.

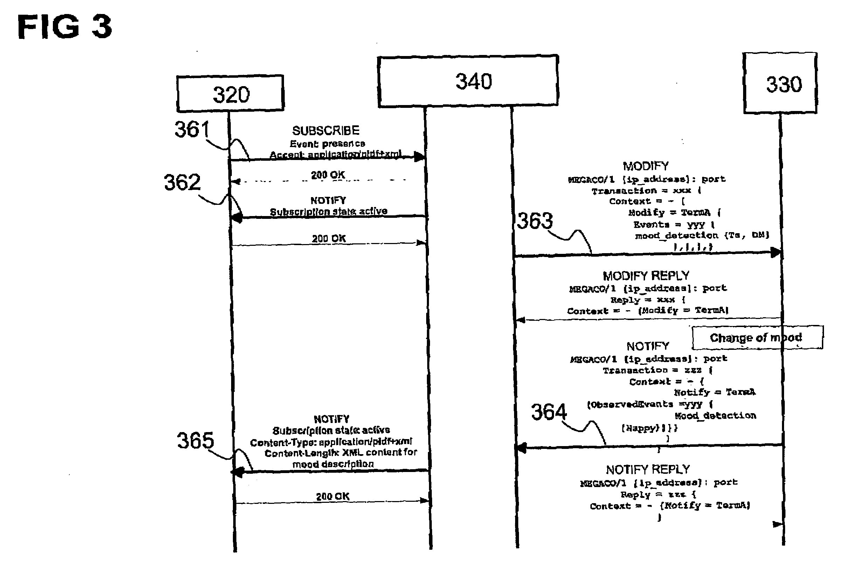

Figure 3 shows a call flow according to another preferred embodiment of the invention. A media gateway controller 340 is connected to a media gateway 330 and to a user device 320. The media gateway 330 is controlled by the media gateway controller 340 by means of the MEGACO-protocol. The user device is involved in a telephone connection to another user device (not shown). The telephone connection passes through the media gateway 330. The user device 320, which is based on SIP, wishes to be informed about the mood of the other user device, which is also connected to the media gateway 330 and media gateway controller 340. That "wish" is communicated to the media gateway controller 340 by means of the message SUBSCRIBE 361. The message NOTIFY 362 that follows is mandatory according to the session initiation protocol to show that the message SUBSCRIBE 361 was succesfully received. The media gateway controller 340 asks then the media gateway 330 with a message MODIFY 363 to perform mood extraction from the telephone connection. Every time the mood changes, the media gateway 330 sends a message NOTIFY 364 to the media gateway controller 340. After that the media gateway controller 340 sends a message NOTIFY 365, which comprises the mood of the user of the other user device to the user device 320. A task of the media gateway controller 340 is to make the conversion between SIP and MEGACO in order to exchange the information about the mood.

### Reference Signs

- 110, 210: first telecommunication network
- 112, 212: first user device
- 114, 214: data structure
- 120, 220: second telecommunication network
- 122, 222: second user device
- 124, 224: data structure
- 130, 230: media gateway
- 132, 134,: 232, 234 interface
- 140, 240: media gateway controller
- 142, 242: package
- 150, 250: telephone connection
- 340: media gateway controller
- 330: media gateway
- 320: user device
- 361: message SUBSCRIBE
- 362: message NOTIFY
- 361: message SUBSCRIBE
- 363: message MODIFY
- 364: message NOTIFY
- 365: message NOTIFY

## Claims

1. Method for transmitting a user related information from a first telecommunication network (110, 210) to a second telecommunication network (120, 220), whereas the first telecommunication network (110, 210) and the second telecommunication network (120, 220) are interconnected by means of a media gateway (130, 230) and the media gateway (130, 230) is controlled by means of a media gateway controller (140, 240) complying with the MEGACO Protocol whereas a telecommunication connection between the first telecommunication network (110, 210) and the second telecommunication network (120, 220) is established via the media gateway (130, 230) or via the media gateway controller (140, 240),
**characterized in that**
the media gateway controller (140, 240) and the media gateway (130, 230) have implemented a package (142, 242) which enables the method steps of
a) an extraction of the user related information from data which is transmitted over the telecommunication connection, and
b) the encoding of the extracted user related information in a format (124, 224) which complies with the second telecommunication network (120, 220).

2. Method according to claim 1,
**characterized in that**
the package (142, 242) complies with the mandatory recommendations of chapter 12.1 of the MEGACO Protocol.

3. Method according to claim 1 or 2,
**characterized in that**
the user related information (114, 124, 214, 224) comprises non-technical information.

4. Method according to anyone of the preceding claims,
**characterized in that**
the user related information (114, 124, 214, 224) comprises the mood of a user.

5. Method according to anyone of the preceding claims,
**characterized in that**
the extraction of the user related information (114, 124) comprises the analysis of a voice stream (150) which flows from a first user device (112) which is connected to the first telecommunication network (110) to a second user device (122) which is connected to the second telecommunication network (120).

6. Method according to anyone of the claims 1 to 4,
**characterized in that**
before the extraction of the user related information, the user related information is encoded in parameterized form and encapsulated within a first data structure (214) which complies with the first telecommunication network (210) by a first user device (212) which is connected to the first telecommunication network (210);
the extraction of the user related information is performed by at least partially decapsulating the user related information from the first data structure (214), resulting in an intermediate data structure;
the encoding of the extracted user related information in the format which complies with the second telecommunication network (210) comprises a further encapsulation of the intermediate structure (224), resulting in a second data structure (224) which complies with the second telecommunication network (220).

7. Method according to anyone of the preceding claims,
**characterized in that**
the method steps a) and b) are performed after predetermined time intervals, whereas before the first performing of the method steps a) and b) the user related information (114, 124) is initially set to a default value which is afterwards repeatedly adapted according to the time intervals.

8. Telecommunication System (100, 140) comprising means (110, 112, 114, 120, 122, 124, 130, 132, 134, 140, 142) that are adjusted for performing any one of the methods of any one of the preceding claims.
